(19) Europäisches Patentamt
European Patent Office
Office européen des brevets

(11) **EP 4 534 481 A1**

(12) **EUROPEAN PATENT APPLICATION**
published in accordance with Art. 153(4) EPC

(43) Date of publication:
**09.04.2025  Bulletin 2025/15**

(21) Application number: **24760465.5**

(22) Date of filing: **05.01.2024**

(51) International Patent Classification (IPC):
$C01F\ 7/02^{(2022.01)}$      $C09D\ 7/61^{(2018.01)}$
$H01M\ 50/446^{(2021.01)}$   $H01M\ 50/449^{(2021.01)}$
$H01M\ 50/443^{(2021.01)}$   $H01M\ 50/46^{(2021.01)}$
$H01M\ 10/052^{(2010.01)}$

(52) Cooperative Patent Classification (CPC):
C01F 7/02; C09D 7/61; H01M 10/052;
H01M 50/443; H01M 50/446; H01M 50/449;
H01M 50/46; Y02E 60/10

(86) International application number:
**PCT/KR2024/000289**

(87) International publication number:
**WO 2024/177272 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.02.2023  KR 20230025344
04.01.2024  KR 20240001329**

(71) Applicant: **LG Energy Solution, Ltd.
Seoul 07335 (KR)**

(72) Inventors:
• **JEONG, So-Mi**
  **Daejeon 34122 (KR)**
• **KIM, Seong-Jun**
  **Daejeon 34122 (KR)**
• **KIM, Yeong-Ha**
  **Daejeon 34122 (KR)**
• **BANG, Ji-Hyun**
  **Daejeon 34122 (KR)**
• **YOON, Yeo-Ju**
  **Daejeon 34122 (KR)**

(74) Representative: **Hoffmann Eitle
Patent- und Rechtsanwälte PartmbB
Arabellastraße 30
81925 München (DE)**

(54) **ALUMINIUM TRIHYDROXIDE PARTICLES, MANUFACTURING METHOD THEREOF, AND SEPARATOR, ELECTRODE ASSEMBLY AND LITHIUM SECONDARY BATTERY INCLUDING SAME**

(57) There are disclosed aluminum trihydroxide particles in which a D50 of the particles is about 3.0 μm or less, a BET of about 3.0 m$^2$/g or more, and a Li content of about 500 ppm or more.

EP 4 534 481 A1

**Description**

TECHNICAL FIELD

The present disclosure relates to aluminum trihydroxide particles, a preparation method thereof, a separator, an electrode assembly, and a lithium secondary battery including the aluminum trihydroxide particles.

This application is based on and claims priority from Korean Patent Applications No. 10-2023-0025344 filed on February 24, 2023 and No. 10-2024-0001329 filed on January 4, 2024 with the Korean Intellectual Property Office, the disclosure of which is incorporated herein in its entirety by reference.

BACKGROUND

A separator that constitutes an electrode assembly of a secondary battery serves as a separation film to allow a flow of ions between a positive electrode and a negative electrode while not being connected electrically. For example, the separator allows electrolytes to pass therethrough while preventing the same diffusion of the electrolytes, thereby preventing an electrical short between the positive electrode and the negative electrode. Therefore, since the separator may affect the capacity, charging and discharging rates, and lifespan of the secondary battery, the material and structure of the separator are considered as important factors that determine the performance and safety of the secondary battery.

A polyolefin-based porous film, which is commonly used as a separator for a lithium secondary battery, exhibits a severe heat shrinkage behavior at a temperature equal to or greater than 100°C due to its material properties and characteristics in a manufacturing process including stretching, and as a result, tends to cause a short circuit between the positive electrode and the negative electrode.

In order to solve safety problems of separators made of polyolefin-based porous films, separators using inorganic particles were proposed.

The inorganic particles are applied to separators by mixing the inorganic particles with a polymer and coating the mixture on a surface of a non-woven fabric or a porous polymer film made of a polymer such as polyolefin. Alternatively, the inorganic particles are applied to a free-standing type separator by mixing the inorganic particles with a polymer, coating the mixture on a support, and then, peeling off the coating. Alternatively, the inorganic particles are applied to a separator by mixing the inorganic particles with a polymer and coating the mixture on a surface of a positive electrode or a negative electrode or surfaces of both electrodes.

SUMMARY

Technical Problem

An aspect of the present disclosure provides aluminum trihydroxide particles that improve a capacity retention rate of a lithium secondary battery and do not cause side reactions in the lithium secondary battery.

Another aspect of the present disclosure provides a preparation method of aluminum trihydroxide particles having the above-described characteristics.

Still another aspect of the present disclosure provides a separator, an electrode assembly, and a lithium secondary battery including aluminum trihydroxide particles having the above-described characteristics.

It will be readily apparent that the objects and advantages of the present disclosure can be realized by means or methods and combinations thereof described in the claims.

Technical Solution

One aspect of the present disclosure provides aluminum trihydroxide particles according to the following embodiments.

A first embodiment relates to aluminum trihydroxide particles having a D50 of about 3.0 $\mu$m or less, a BET of about 3.0 m$^2$/g or more, and a lithium (Li) content of about 500 ppm or more.

A second embodiment relates to the aluminum trihydroxide particles according to the first embodiment described above, and the D50 is about 2.5 $\mu$m or less, the BET is about 3.5 m$^2$/g or more, and the Li content is about 800 ppm or more.

A third embodiment relates to the aluminum trihydroxide particles according to the first embodiment described above, and the D50 is about 2.7 $\mu$m or less, the BET is about 3.8 m$^2$/g or more, and the Li content is about 900 ppm or more.

A fourth embodiment relates to the aluminum trihydroxide particles according to the first embodiment described above, and the D50 is about 2.2 $\mu$m or less, the BET is about 4.2 m$^2$/g or more, and the Li content is about 1050 ppm or more.

A fifth embodiment relates to the aluminum trihydroxide particles according to any one of the first embodiment to the fourth embodiment described above, and a sodium (Na) content is about 900 ppm or less.

A sixth embodiment relates to the aluminum trihydroxide particles according to any one of the first embodiment to the fourth embodiment described above, and a Na content is about 100 ppm or less.

A seventh embodiment relates to the aluminum trihydroxide particles according to any one of the first embodiment to the fourth embodiment described above, and a Na content is about 10 ppm or less.

One aspect of the present disclosure provides a separator according to the following embodiments.

An eighth embodiment relates to a preparation method of aluminum trihydroxide particles according to any one of the first embodiment to the seventh embodiment described above, and the preparation method includes: (S1) obtaining an eluate by adding bauxite to a basic aqueous solution containing Li; (S2) separating the eluate obtained at (S1) by filtering solids from the eluate; and (S3) precipitating aluminum trihydroxide from the separated eluate, wherein the aluminum trihydroxide particles have a D50 of about 3.0 $\mu$m or less, a BET of about 3.0 m$^2$/g or more, and a Lithium (Li) content of about 500 ppm or more.

A ninth embodiment relates to the preparation method of aluminum trihydroxide particles according to the eighth embodiment described above, and the preparation method further includes: prior to (S3) described above, adding aluminum trihydroxide seeds to the separated eluate, stirring the eluate, and then filtering the aluminum trihydroxide seeds to separate the eluate again.

A tenth embodiment relates to the preparation method of aluminum trihydroxide particles according to the eighth embodiment or ninth embodiment described above, and the aluminum trihydroxide precipitated from (S3) is pulverized, and then the pulverized aluminum trihydroxide is added to (S1) instead of the bauxite to repeat (S1) to (S3).

An eleventh embodiment relates to a separator including a porous polymer film; and an organic-inorganic composite coating layer formed on at least one surface of the porous polymer film and including a mixture of inorganic particles and a polymer, and the inorganic particles include the aluminum trihydroxide particles according to any one of the first embodiment to the seventh embodiment described above.

A twelfth embodiment relates to a separator including a porous polymer non-woven fabric; and an organic-inorganic composite coating layer coated on at least one surface of the porous polymer non-woven fabric and including a mixture of inorganic particles and a polymer, and the inorganic particles include aluminum trihydroxide particles according to any one of the first embodiment to the seventh embodiment described above.

A thirteenth embodiment relates to a separator comprising a free-standing type organic-inorganic composite film including a mixture of inorganic particles and a polymer, wherein the inorganic particles include the aluminum trihydroxide particles according to any one of the first embodiment to the seventh embodiment described above.

One aspect of the present disclosure provides an electrode assembly according to the following embodiments.

A fourteenth embodiment relates to an electrode assembly including: a positive electrode, a negative electrode, and a separator interposed between the positive electrode and the negative electrode, and the separator is the separator according to any one of the eleventh embodiment to thirteenth embodiment described above.

A fifteenth embodiment relates to an electrode assembly including a separator of a porous organic-inorganic composite coating layer formed on at least one surface of a positive electrode, a negative electrode, or both the positive electrode and the negative electrode and including a mixture of inorganic particles and a binder polymer, and the inorganic particles include aluminum trihydroxide particles according to any one of the first embodiment to the seventh embodiment described above.

One aspect of the present disclosure provides a lithium secondary battery according to the following embodiments.

A sixteenth embodiment relates to a lithium secondary battery including an electrode assembly according to any one of the fourteenth embodiment or the fifteenth embodiment described above.

Advantageous Effects

According to an embodiment of the present disclosure, in aluminum trihydroxide particles including Li of a predetermined content or more while D50 and BET are controlled within a predetermined range, the Li which is an impurity remaining in the particles does not cause a side reaction in a lithium secondary battery and rather, improves a capacity retention rate of the lithium secondary battery.

Effects of respective components of the present disclosure will be described in more detail below.

DETAILED DESCRIPTION

Hereinafter, the present disclosure will be described in detail. Prior to the description, it should be understood that the terms or words used in the specification and the claims should not be construed as being limited to general and dictionary meanings, but should be interpreted as the meanings and concepts corresponding to the technical idea of the present disclosure based on the principle that the inventor is allowed to define terms in order to explain his/her invention in the best way possible. Therefore, the description proposed herein is just an example for the purpose of illustration only and is not intended to indicate all technical ideas of the present disclosure, so it should be understood that various equivalents and modifications could be made thereto at the time of filing of the present application.

Throughout the description herein, when a part is said to "include" or "is provided with" a certain component, this does not exclude other components, but means that the part may further include or may be further provided with other components, unless specifically stated to the contrary.

Throughout the specification of the present application, characteristics of having pores means that an object includes a plurality of pores to allow gaseous and/or liquid fluid to pass from one side surface to the other side surface of the object by a structure in which the pores are connected to each other.

Throughout the specification of the present disclosure, particles refer to small objects with a diameter of a few micrometers or less so that they are almost invisible regardless of their shapes, such as a spherical shape, an oval shape, or an irregular shape.

As used herein, "about", "approximately", and "substantially" are used to mean ranges of numerical values or degrees or approximations thereof in consideration of inherent manufacturing and material tolerances and are used to prevent infringers from unfairly using the disclosed contents in which precise or absolute figures provided to aid the understanding of the present disclosure are mentioned.

Throughout the present disclosure, a separator is referred to as including a plurality of pores and having a porous characteristic, and serving as a porous ion-conducting barrier which allows ions to pass therethrough while blocking electrical contact between a negative electrode and a positive electrode in an electrochemical device.

In forming a separator by applying inorganic particles, various types of inorganic particles that are electrochemically stable within an operating voltage range of a lithium secondary battery have been proposed. Among the inorganic particles, aluminum trihydroxide (ATH) has drawn attention as an inorganic particle due to, for example, its flame retardant properties.

ATH is prepared by adding bauxite powder which is raw material into an aqueous NaOH solution and eluting an aluminum component therefrom to obtain an eluate, and then precipitating ATH from the eluate and pulverizing the ATH.

In the ATH obtained by using the NaOH solution in an elution process of bauxite powder, a Na component remains as an impurity. The Na component remaining in the ATH may not be helpful for performance, such as a capacity retention rate of the lithium secondary battery and rather, may cause side reactions within the lithium secondary battery.

As described above, in order to solve performance and safety problems of lithium secondary batteries, a separator with ATH particles which are inorganic materials having flame retardant properties, has been proposed.

On the other hand, an aqueous NaOH solution is used when preparing the ATH particles, therefore a Na component remains as an impurity in the obtained ATH. Na component remaining in the ATH is not beneficial to the performance of the lithium secondary battery, such as a capacity retention rate and rather, and may cause side reactions within the lithium secondary battery, which may lead to performance and safety problems of the lithium secondary battery.

In the present disclosure, an aqueous LiOH solution is used instead of the aqueous NaOH solution in the preparation of ATH, so that the impurity remaining in the prepared ATH is a Li component instead of the Na component. Unlike the Na impurity, the Li impurity does not cause side reactions within the lithium secondary battery and increases ionic conductivity of the lithium secondary battery, thereby improving the capacity retention rate. Meanwhile, the basic aqueous solution according to one embodiment of the present disclosure is not limited to the aqueous LiOH solution and may be, for example, any basic aqueous solution containing Li.

According to one aspect of the present disclosure, there are provided ATH particles having a D50, which is an average particle diameter of inorganic particles, of about 3.0 $\mu$m or less, a BET, which is a specific surface area, of about 3.0 $m^2$/g or more, and a Li content of about 500 ppm or more.

For example, the ATH particles may have a D50 of about 2.5 $\mu$m or less, a BET of about 3.5 $m^2$/g or more, and a Li content of about 800 ppm or more.

Alternatively, the ATH particles may have a D50 of about 2.7 $\mu$m or less, a BET of about 3.8 $m^2$/g or more, and a Li content of about 900 ppm or more.

In another example, the D50 may be about 2.2 $\mu$m or less, the BET may be about 4.2 $m^2$/g or more, and the Li content may be about 1050 ppm or more. In another example, the D50 may be about 1.2 $\mu$m or less, the BET may be about 7.8 $m^2$/g or more, and the Li content may be about 1910 ppm or more.

When the Li content of the ATH particles is relatively low such as, for example, less than 500 ppm, there may be limitation in improving the capacity retention rate of the lithium secondary battery. In addition, when the D50 of the ATH particles exceeds 3.0 $\mu$m, or when the BET becomes too small, it may be difficult to prepare ATH particles with a Li content of 500 ppm or more.

The Li content of the ATH particles is sufficient when it is equal to or greater than 500 ppm, so an upper limit therefor is not limited. For example, the upper limit for the Li content for the ATH particles may be 10,000 ppm but is not limited thereto.

The smaller the D50 of the ATH particles, the larger the BET. Conversely, the larger the BET, the smaller the D50.

Thus, a lower limit on the D50 and an upper limit on the BET of the ATH particles are not limited thereto. For example, the lower limit on the D50 of the ATH particles may be 0.01 $\mu$m and the upper limit on BET may be 20,000 g/m$^2$, but present disclosure is not limited thereto.

When the D50 of the ATH particles exceeds 3.0 $\mu$m, the BET becomes too small and in this case, it may be difficult to manufacture ATH particles with a Li content of 500 ppm or more.

In accordance with one embodiment, the aforementioned ATH particles may be prepared as follows.

First, bauxite which is an aluminum-rich mineral, is added to an aqueous LiOH solution to obtain an eluate (S1). From this step, an aluminum component of the bauxite is eluted. In one embodiment, the eluate may be prepared by powdering the bauxite and putting the powdered bauxite together with an aqueous LiOH solution in a high-pressure reactor and stirring the solution at a high temperature.

Subsequently, solids are filtered from the result of (S1) to separate the eluate (S2).

ATH is then precipitated from the separated eluate (S3). For example, the ATH may be precipitated by lowering the temperature of the separated eluate and then stirring the eluate.

Prior to the step (S3), ATH seeds may be added to the separated eluate, the eluate may be stirred, and then, the ATH seeds may be filtered to separate the eluate again. The eluate separated again is put into the step (S2).

The ATH precipitated from the step (S3) is pulverized, and then, the pulverized ATH may be put into the step (S1), instead of the bauxite, to repeat the steps (S1) through (S3) one or more times. From the repeated steps, the Li content and the content of other impurities in the ATH may be controlled.

Meanwhile, in preparing the ATH particles of the present disclosure, bauxite powder which is an aluminum-rich mineral, may be used with an aqueous LiOH solution to conduct the aforementioned elution process and precipitation process, and then, a precipitated result may be used with an aqueous NaOH solution to conduct the elution process and precipitation process again, thereby preparing ATH precipitates. The ATH obtained in this way has Li impurities of about 500 ppm or more and also has Na impurities. In this case, the Na content may be about 900 ppm or less to minimize side reactions in the lithium secondary battery caused by the Na impurity. According to one embodiment, the Na content may be about 100 ppm or less, or the Na content may be about 10 ppm or less.

The ATH precipitate obtained by the aforementioned process may be washed with distilled water and then pulverized using a pulverizer such as a bead mill to obtain ATH particles having a desired particle size.

The term "D50" of the present disclosure means an average particle diameter of the inorganic particles as described above. For example, 'D50' means a particle diameter of particles that correspond to 50% of the total volume when the particle diameters are measured by a particle size analyzer and accumulated in the order from small particles.

In the present disclosure, the average particle diameter may be measured by a laser diffraction method. The laser diffraction method may measure particle diameters typically ranging from a submicron region to several nanometers and highly reproducible and highly resolvable results may be obtained with the laser diffraction method.

In the present disclosure, the specific surface area (BET) of the particles is measured from the amount of adsorbed nitrogen gases using a specific surface area analysis instrument.

In the present disclosure, the content of Li or Na impurities is measured using, for example, inductively coupled plasma-optical emission spectroscopy (ICP-OES).

The ATH particles of the present disclosure as described above may be used for lithium secondary batteries, for example, may be used for separators in the lithium secondary batteries. For example, the ATH particles of the present disclosure may be used as a separator of a lithium secondary battery, in the form of an organic-inorganic composite layer including a mixture of inorganic particles and a polymer, but the present disclosure is not limited thereto.

In a separator of a first form that includes a porous polymer film; and an organic-inorganic composite coating layer formed on at least one surface of the porous polymer film and including a mixture of inorganic particles and a polymer, the inorganic particles include the ATH particles of the present disclosure described above.

A porous polymer film substrate may be a porous polymer film made of polyolefin such as polyethylene, polypropylene, polybutene, or polypentene, and the polyolefin porous polymer film exhibits a shutdown function at a temperature of, for example, about 80 °C to 130 °C.

In this case, the polyolefin porous polymer film may be formed using either one or a mixture of two or more of a polyolefin-based polymer, such as polyethylene including high-density polyethylene, linear low-density polyethylene, low-density polyethylene or ultrahigh-molecular weight polyethylene, polypropylene, polybutylene, or polypentene.

In addition, the porous polymer film may be formed using either one or a mixture of two or more of a heat-resistant polymer with a melting point of 200 °C or higher, such as polyethylene terephthalate, polybutylene terephthalate, polyacetal, polyamide, polycarbonate, polyimide, polyetheretherketone, polyethersulfone, polyphenyleneoxide, polyphenylenesulfide, or polyethylenenaphthalene, in addition to the polyolefin-based described above, but is not limited thereto.

The porous polymer film may be formed in a structure in which two or more film layers are stacked, and each film layer may be formed of the above-described polymer such as polyolefin or polyester either alone or a mixture of two or more of the polymers.

The organic-inorganic composite coating layer, including mainly a mixture of the polymer and the inorganic particles including the ATH of the present disclosure described above, is formed on at least one surface of the porous polymer film.

The ATH of the present disclosure described above contributes to improving the capacity retention rate of the lithium secondary battery along with improving the flame retardancy of the separator.

Besides the ATH, other inorganic particles may be mixed. The inorganic particles suppresses a heat shrinkage phenomenon of the porous polymer film during so called a thermal runaway of the battery, and even if the polymer film melts down, the inorganic particles prevent a direct contact between a positive electrode and a negative electrode and prevents explosion of the battery.

There are no specific restrictions on the inorganic particles that may be mixed in addition to the ATH as long as the inorganic particles to be used are electrochemically stable. For example, the inorganic particles that may be used in the present disclosure are not particularly limited, as long as the inorganic particles to be used do not cause oxidation and/or reduction reactions in an operating voltage range of the applied lithium secondary battery (e.g., 0 to 5 V on a Li/Li$^+$ basis). For example, the use of inorganic particles with a relatively high dielectric constant as the inorganic particles may contribute to an increase in a degree of dissociation of electrolyte salts, such as lithium salts, in an electrolyte liquid, thereby improving the ionic conductivity of the electrolyte.

For the foregoing reasons, the inorganic particles may include high dielectric inorganic particles having a dielectric constant of about 5 or greater, or about 10 or greater. Non-limiting examples of the inorganic particles having a dielectric constant of about 5 or more may include any one inorganic particle selected from the group consisting of $BaTiO_3$, $Pb(Zr_x, Ti_{1-x})O_3$ (PZT, where 0<x<1), $Pb_{1-x}La_xZr_{1-y}Ti_yO_3$ (PLZT, where 0< x<1, 0<y<1), $(1-x)Pb(Mg_{1/3}Nb_{2/3})O_{3-x}PbTiO_3$ (PMN-PT, where 0<x<1), hafnia ($HfO_2$), $SrTiO_3$, $SnO_2$, $CeO_2$, MgO, NiO, CaO, ZnO, $ZrO_2$, $Y_2O_3$, $Al_2O_3$, boehmite, AlOOH, SiC, and $TiO_2$, or a mixture of two or more of them.

In addition, as for the inorganic particles, inorganic particles with lithium ion transfer capability, that is, inorganic particles that contain lithium elements but do not store lithium and have a function to transfer lithium ions, may be used. Non-limiting examples of the inorganic particles having lithium ion transfer capability include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-series glass ($0 < x < 4$, $0 < y < 13$) such as $14Li_2O-9Al_2O_3-38TiO_2-39P_2O_5$, lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$) such as $Li_{3.25}Ge_{0.25}P_{0.75}S_4$, lithium nitride ($Li_xN_y$, $0 < x < 4$, $0 < y < 2$) such as $Li_3N$, $SiS_2$ series glass ($Li_xSi_yS_z$, $0 < x < 3$, $0 < y < 2$, $0 < z < 4$) such as $Li_3PO_4-Li_2S-SiS_2$, $P_2S_5$ series glass ($Li_xP_yS_z$, $0 < x < 3$, $0 < y < 3$, $0 < z < 7$) such as $LiI-Li_2S-P_2S_5$, or a mixture of two or more of them.

The inorganic particles are mixed with the polymer and coated on at least one surface of the porous polymer film substrate. Non-limiting examples of the polymer may include polyvinylidene fluoride, polyvinylidene fluoride-co-hexafluoro propylene, polyvinylidene fluoride-co-trichloro ethylene, polyvinylidene fluoride-co-chlorotrifluoro ethylene, polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene-butadiene copolymer, polyimide, or a mixture of two or more of them, and either an ion-conductive polymer or ion-non-conductive polymer may be used therefor.

The inorganic particles may be located substantially in contact with each other. In this case, when the mixed polymer is formed as a coating layer on a part or the entirety of surfaces of the inorganic particles, the polymer may connect and fix the inorganic particles so that the inorganic particles remain bound together.

The separator of the first form as described above may be manufactured by further dispersing the inorganic particles in a slurry obtained by dissolving or dispersing the polymers in a solvent, and then coating and drying the slurry on at least one surface of a porous polymer film to form an organic-inorganic composite coating layer.

In a separator of a second form that includes a porous polymer non-woven fabric; and an organic-inorganic composite coating layer including a mixture of inorganic particles and a polymer, which is coated on at least one surface of the porous polymer non-woven fabric, the inorganic particles include ATH particles of the present disclosure as described above.

The porous polymer non-woven fabric refers to a porous polymer non-woven fabric with pores formed between fibers constituting the non-woven fabric, and examples of porous polymer non-woven fabric may include spunbonded non-woven fabric, and meltblown non-woven fabric. The non-woven fabric refers to a fabric formed by interlocking fibers, rather than meaning a fabric woven with warp and weft threads using a weaving machine or a knitted fabric knitted using a knitting machine.

The fibers constituting the non-woven fabric may be made of the heat-resistant polymer described above, and fibers made of polyolefin-based polymers may be used either alone or mixed with the heat-resistant polymer fibers.

As for the inorganic particles and the polymer, the aforementioned inorganic particles and polymer may be used.

The separator of the second form may be manufactured by further dispersing inorganic particles in a slurry obtained by dissolving or dispersing polymers in a solvent, and then coating and drying the slurry on at least one surface of a porous polymer non-woven fabric to form an organic-inorganic composite coating layer. The organic-inorganic composite coating layer may be located on a surface of the porous polymer non-woven fabric, may be located in both the surface and internal pores of the porous polymer non-woven fabric, or may be located mainly in an interior of the porous polymer non-woven fabric, depending on a pore size of the porous polymer non-woven fabric.

The inorganic particles may be located substantially in contact with each other, except for a state in which fibers are interposed between them.

In a separator of a third form that includes a freestanding type organic-inorganic composite film including a mixture of inorganic particles and a polymer, the inorganic particles include the ATH particles of the present disclosure as described above.

The term free-standing type refers to a form in which a separator is able to maintain a shape by itself without being coated or adhered to another support.

As for the inorganic particles and the polymer, the aforementioned inorganic particles and polymer may be used.

The separator of the third form may be manufactured by further dispersing inorganic particles in a slurry obtained by dissolving or dispersing polymers in a solvent, coating and drying the slurry on a support such as polytetrafluoroethylene, and then, peeling the coating off from the support. In this case, the inorganic particles of the free-standing type organic-inorganic composite film may be substantially in contact with each other. When the mixed polymer is formed as a coating layer on a part or the entirety of surfaces of the inorganic particles, the polymer may connect and fix the inorganic particles so that the inorganic particles remain bound together.

A separator of a fourth form may be a separator in the form of a porous organic-inorganic composite coating layer which is formed on at least one surface of a positive electrode, a negative electrode, or both the positive electrode and the negative electrode and includes a mixture of inorganic particles and a binder polymer.

As for the inorganic particles and the polymer, the aforementioned inorganic particles and polymer may be used.

The separator of the fourth form may be manufactured by further dispersing inorganic particles in a slurry obtained by dissolving or dispersing polymers in a solvent, and then coating and drying the slurry on at least one surface of a positive electrode, a negative electrode or both the positive electrode and the negative electrode to form an organic-inorganic composite coating layer.

In the separator of any of the first form to the fourth form described above, the organic-inorganic composite coating layer or organic-inorganic composite film may be porous. The weight ratio of the inorganic particles and the polymer may range from about 99:1 to 50:50, but is not limited thereto. The thickness of the separator may range from about 1 $\mu$m to 30 $\mu$m, but is not limited thereto.

In this case, pores formed in the organic-inorganic composite coating layer or organic-inorganic composite film may be formed in a polymer matrix by plasticizer extraction, or may be configured as voids formed between the inorganic particles as the inorganic particles are located substantially in contact with each other.

The above-described separators of the present disclosure may be applied to an electrode assembly as follows, but are not limited thereto.

The separator of any one of the first form to the third form is stacked on or interposed between a positive electrode, a negative electrode or the positive electrode and the negative electrode, and they are bonded to each other through a process such as a lamination process to manufacture an electrode assembly.

The separator of the fourth form is stacked in the form of a coating layer on at least one surface of a positive electrode, a negative electrode, or both the positive electrode and the negative electrode, and they are bonded to each other through a process such as a lamination process to manufacture an electrode assembly.

Depending on the necessity, a typical, conventional separator may be interposed between the positive electrode and the negative electrode in addition to the aforementioned separators of the present disclosure.

Hereinafter, the positive electrode and the negative electrode constituting the electrode assembly will be described by way of example.

The positive electrode includes a positive electrode current collector and a positive electrode active material layer formed on the positive electrode current collector.

For the positive electrode, the positive electrode current collector is not particularly limited as long as it is conductive without causing chemical changes in the battery. For example, stainless steel, aluminum, nickel, titanium, calcined carbon, or aluminum or stainless steel which is surface-treated with carbon, nickel, titanium or silver may be used for the positive electrode current collector. Furthermore, the positive electrode current collector may have a thickness of typically about 3 $\mu$m to 500 $\mu$m, and fine unevenness may be formed on a surface of the positive electrode current collector to increase adhesion of the positive electrode active material. For example, the positive electrode current collector may be used in various forms such as films, sheets, foils, nets, porous materials, foams and non-woven materials.

The positive electrode active material layer may include publicly known positive electrode active material, conductive material, and binder.

The positive electrode active material may include a layered compound such as lithium cobalt oxide (LiCoO$_2$) or

lithium nickel oxide ($LiNiO_2$), or compounds substituted with one or more transition metals; lithium manganese oxide represented by Chemical Formula $Li_{1+x}Mn_{2-x}O_4$ (where, x is 0 to 0.33), $LiMnO_3$, $LiMn_2O_3$, or $LiMnO_2$; lithium copper oxide ($Li_2CuO_2$); vanadium oxide such as $LiV_3O_8$, $V_2O_5$, or $Cu_2V_2O_7$; Ni-site type lithium nickel oxide represented by Chemical Formula $LiNi_{1-x}M_xO_2$ (where M is Co, Mn, Al, Cu, Fe, Mg, B, or Ga, and x is 0.01 to 0.3); lithium manganese composite oxide represented by Chemical Formula $LiMn_{2-x}M_xO_2$ (where M is Co, Ni, Fe, Cr, Zn, or Ta, and x is 0.01 to 0.1) or $Li_2Mn_3MO_8$ (where M is Fe, Co, Ni, Cu, or Zn); $LiMn_2O_4$ wherein a portion of Li is substituted with alkaline earth metal ions; disulfide compounds; and $Fe_2(MoO_4)_3$, but is not limited thereto.

The conductive material is used to provide conductivity to an electrode and may be used without particular restriction as long as it does not cause chemical changes and has electronic conductivity in a battery. Examples of the conductive material may include graphite such as natural graphite or artificial graphite; carbon-based materials such as carbon black, acetylene black, Ketjen black, channel black, furnace black, lamp black, thermal black, and carbon fiber; metal powder or metal fibers such as copper, nickel, aluminum, and silver; conductive whiskers such as zinc oxide and potassium titanate; conductive metal oxide such as titanium oxide; or conductive polymers such as polyphenylene derivatives, and any one of them may be used alone or a mixture of two or more of them may be used. The conductive material may be included in an amount of about 1 wt% to 30 wt% based on a total weight of the positive electrode active material layer.

The binder serves to improve adhesion between positive electrode active material particles and adhesion of the positive electrode active material to the positive electrode current collector. Examples of the binder may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluorine rubber, or various copolymers thereof, and any one of them may be used alone or a mixture of two or more of them may be used. The binder may be included in an amount of about 1 wt% to 30 wt% based on the total weight of the positive electrode active material layer.

The positive electrode may be manufactured according to a conventional positive electrode preparation method. For example, the positive electrode may be manufactured by applying a composition for forming a positive electrode active material layer including a positive electrode active material and optionally, a binder and a conductive material onto a positive electrode current collector, followed by drying and rolling. In this case, types and contents of the positive electrode active material, the binder, and the conductive material are as described above.

The solvent may be any solvent commonly used in the technical field, such as dimethyl sulfoxide (DMSO), isopropyl alcohol, N-methylpyrrolidone (NMP), acetone, or water, and any one of them may be used alone or a mixture of two or more of them may be used. The amount of the solvent used is sufficient as long as it is possible to dissolve or disperse the positive electrode active material, the conductive material, and the binder and to have a viscosity capable of exhibiting good thickness uniformity upon subsequent application for preparation of the positive electrode, in consideration of an application thickness of a slurry, a manufacturing yield thereof.

Alternatively, the positive electrode may be manufactured by casting the composition for forming the positive electrode active material layer on a separate support and then laminating a film which is obtained by peeling from the support on a positive electrode current collector.

The negative electrode includes a negative electrode current collector and a negative electrode active material layer located on the negative electrode current collector.

The negative electrode current collector is not particularly limited as long as it has high conductivity without causing chemical changes in the battery, and for example, copper, stainless steel, aluminum, nickel, titanium, calcined carbon, or copper or stainless steel which is surface-treated with carbon, nickel, titanium or silver, or an aluminum-cadmium alloy may be used for the negative electrode current collector. In addition, the negative electrode current collector may typically have a thickness of about 3 μm to 500 μm, and similarly to the positive electrode current collector, fine unevenness may be formed on a surface of the current collector to strengthen bonding force of the negative electrode active material. For example, the negative electrode current collector may be used in various forms such as films, sheets, foils, nets, porous materials, foams, and non-woven materials.

The negative electrode active material layer optionally includes a binder and a conductive material along with the negative electrode active material. As an example, the negative electrode active material layer may be manufactured by coating and drying a composition for forming a negative electrode active material layer including a negative electrode active material and optionally a binder and a conductive material on a negative electrode current collector, or by casting the composition for forming the negative electrode active material layer on a separate support and laminating a film obtained by peeling from this support onto a negative electrode current collector.

As for the negative electrode active material, a compound that allows for reversible intercalation and deintercalation of lithium may be used. Examples of the negative electrode active material may include carbonaceous materials such as artificial graphite, natural graphite, graphitized carbon fiber, and amorphous carbon; metallic compounds which are capable of being alloyed with lithium, such as Si, Al, Sn, Pb, Zn, Bi, In, Mg, Ga, Cd, Si alloys, Sn alloys, or Al alloys; metal oxides capable of doping and undoping lithium, such as $SiO_\beta$ ($0 < \beta < 2$), $SnO_2$, a vanadium oxide, and a lithium vanadium oxide; or a composite including the metallic compound and the carbonaceous material, such as a Si-C composite or Sn-C composite, and any one of them may be used alone or a mixture of two or more of them may be used. In addition, a metallic lithium thin film may be used as the negative electrode active material. As for the carbon material, both low-crystalline carbon and high-crystalline carbon may be used. Typical examples of the low crystalline carbon may be soft carbon and hard carbon. Typical examples of the high crystalline carbon may be amorphous, planar, flaky, spherical or fibrous natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

Additionally, the binder and the conductive material may be the same as those previously described for the positive electrode.

Meanwhile, the lithium secondary battery according to one aspect of the present disclosure includes an electrode structure described above.

The lithium secondary battery includes the electrode structure and electrolytes described above, and the electrolytes used in the present disclosure include, for example, organic liquid electrolytes, inorganic liquid electrolytes, solid polymer electrolytes, gel-type polymer electrolytes, solid inorganic electrolytes, and molten inorganic electrolytes which are capable of being used in the manufacture of the lithium secondary battery, but is not limited thereto.

According to one embodiment, the electrolytes may include an organic solvent and lithium salts.

As for the organic solvent, any solvent may be used without particular limitation as long as it is able to serve as a medium through which ions involved in an electrochemical reaction of the battery may move. For example, as for the organic solvent, an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethylcarbonate (DEC), methylethylcarbonate (MEC), ethylene carbonate (EC), or propylene carbonate (PC); an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes, may be used. Among them, the carbonate-based solvent may be used, and a mixture of cyclic carbonate (e.g., ethylene carbonate or propylene carbonate) with high ionic conductivity and a high dielectric constant that may improve charge/discharge performance of the battery, and a low-viscosity linear carbonate-based compound (for example, ethylmethyl carbonate, dimethyl carbonate, or diethyl carbonate) may be used. In this case, the performance of the electrolyte may be excellent when the cyclic carbonate and the chain carbonate are mixed and used in a volume ratio of about 1:1 to about 1:9.

The lithium salts may be used without particular limitation as long as they are compounds capable of providing lithium ions used in lithium secondary batteries. For example, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used for the lithium salts. For example, a concentration of the lithium salt may be used in a range of about 0.1 M to 2.0 M. When the concentration of the lithium salt is within the range, since the electrolyte has an appropriate conductivity and viscosity, it is possible to exhibit excellent electrolyte performance, and effectively move lithium ions.

In order to improve the lifespan characteristics of the battery, suppress a reduction in battery capacity and improve discharge capacity of the battery, for example, one or more additives such as a halo-alkylene carbonate-based compound such as difluoroethylene carbonate, pyridine, triethylphosphite, triethanolamine, cyclic ether, ethylene diamine, n-glyme, hexaphosphoric triamide, nitrobenzene derivatives, sulfur, quinone imine dyes, N-substituted oxazolidinones, N,N-substituted imidazolidine, ethylene glycol dialkyl ether, ammonium salts, pyrrole, 2-methoxy ethanol, or aluminum trichloride may be further added in addition to the above electrolyte components. In this case, the additive may be included in an amount of 0.1 wt% to 5 w% based on a total weight of the electrolytes.

The lithium secondary battery according to the present disclosure may be useful in the field of portable devices such as mobile phones, laptop computers, and digital cameras, and electric vehicles such as hybrid electric vehicles (HEV).

Hereinafter, embodiments of the present disclosure will be described in detail so that those skilled in the art may easily implement the present disclosure. However, the present disclosure may be implemented in many different forms and is not limited to the embodiments described herein.

**Example 1**

**[Preparation of Aluminum Trihydroxide Particles]**

(1) Elution Step

100 g of bauxite which had been crushed and pulverized into powder with a ball mill and an aqueous LiOH solution having a 40% concentration were added to a high pressure reactor and stirred at 200 °C for 1 hour to prepare an eluate. In this case, a content ratio of the added bauxite and LiOH was adjusted to 0.6.

(2) Precipitation Step

The red-mud in the form of a solid-state was filtered from the eluate, and then 40 g of ATH seeds were mixed with the separated solution and the mixed solution was stirred at 80 °C for 1.5 hours. After filtering aluminum trihydroxide seeds therefrom, the filtrate was stirred at 50 °C for 12 hours or more to prepare ATH precipitates. The prepared ATH precipitates were washed with distilled water.

(3) Repeated Steps

The ATH precipitates obtained from the step (2) were crushed and pulverized and added, instead of bauxite, and the steps (1) and (2) were repeated. From these repeated steps, the content of Li and the content of other impurities may be adjusted.

(4) Pulverization Step

Distilled water was added to the ATH precipitates obtained through the above-described processes so that the ATH precipitates have a solid content of about 40%, and the mixture was pulverized using a bead mill. In this case, 3 passes were performed at a bead size of 0.7 mm, a bead filling ratio of 75%, and a linear speed of 700 rpm (the pulverization step was repeated 3 times). After bead mill processing, the slurry in which fine ATH particles were dispersed was obtained, and the obtained slurry was dried at 120 °C to obtain fine ATH particles.

The D50, the BET, the Li content of ATH obtained through the above-described processes were measured and illustrated in Table 1.

**[Manufacture of Separator]**

20 g of ATH particles obtained through the above-mentioned process, 1.0 g of a polyacrylic acid dispersant solution (a solid content of 42 wt%), and 20 g of beads with a diameter of 0.5 mm for dispersion were added into 30.5 g of dispersion liquid which is mixed with water:ethanol at a weight ratio of about 95:5, and the dispersion was stirred for 2 hours using a paint shaker to prepare an ATH particle dispersion liquid. Next, 0.24 g of surfactant (FC4430, 3M company, a solid content of 90 wt%) and water-dispersed particulate acrylic-based polymers (a particle diameter 150 nm, Tg -25 °C) were added into the ATH particle dispersion liquid at a content of 40 wt% and the dispersion liquid was shaken to prepare a slurry for coating.

The prepared coating slurry was filtered through a 200 mesh filter, coated on one surface of a wet porous polyethylene film (SEMCORP company, a porosity of 45%, a thickness of 9 $\mu$m) using a bar coater followed by drying, and coated on the other surface of the film under the same conditions to manufacture a double-sided coated separator (a separator coated with the slurry on both surfaces). A total thickness of a coating layer formed on both surfaces of the film after coating is presented in Table 1.

**[Manufacture of Lithium Secondary Battery]**

(Manufacture of Positive Electrode)

A LiNi$_{0.8}$Co$_{0.1}$Mn$_{0.1}$O$_2$ positive electrode active material, a carbon black conductive material, a binder and a dispersant, which are a mixture of a PVDF-HFP copolymer and PVDF, were mixed with water at a weight ratio of 97.5:0.7:1.66:0.14 to prepare a slurry for forming a positive electrode active material layer in such a manner that a total content of remaining components excluding water was 50 wt%. Next, the slurry was coated on an aluminum thin film current collector having a thickness of 10 $\mu$m and dried, to manufacture a positive electrode where a positive electrode active material layer having a thickness of 120 $\mu$m was formed.

(Manufacture of Negative Electrode)

A graphite (a mixture of natural graphite and artificial graphite) negative electrode active material, a carbon black conductive material, a binder and a dispersant, which are a mixture of PVDF-HFP copolymer and PVDF, were mixed with water at a weight ratio of 97.5:0.7:1.66:0.14 to prepare a slurry for forming a negative electrode active material layer in such a manner that a total content of remaining components excluding water was 50 wt%. Next, the slurry was coated to a copper thin film current collector having a thickness of 10 μm and dried, to manufacture a negative electrode where a negative electrode active material layer having a thickness of 120 μm was formed.

(Manufacture of Mono-Cell)

The separator manufactured by the above-described method was stacked and interposed between the positive electrode and the negative electrode, and side surfaces thereof were fixed with polyimide tape to manufacture a mono-cell electrode assembly.

(Manufacture of Lithium Secondary Battery)

A lithium secondary battery was manufactured by injecting an electrolyte solution where 1M of $LiPF_6$ was dissolved in a solvent mixed at a volume ratio of ethylene carbonate/ethylmethyl carbonate = 3:7 into the mono-cell.

**Example 2**

Example 2 was performed as in the same manner as Example 1 with the exception that in the (4) pulverization step in [Preparation of ATH particles], a bead size was changed to 1 mm and a total of 2 passes were performed (the pulverization step was repeated twice).

**Example 3**

Example 3 was performed as in the same manner as Example 2 with the exception that the (3) repeated steps in [Preparation of ATH particles] were omitted.

**Comparative Example 1**

Comparative Example 1 was performed as in the same manner as Example 2 with the exception that during the (3) repeated steps in [Preparation of ATH particles], an aqueous NaOH solution was used instead of the aqueous LiOH solution in the elution step (1).

**Comparative Example 2**

Comparative Example 2 was performed as in the same manner as Example 1 with the exception that during the (1) elution step in [Preparation of ATH particles], an aqueous NaOH solution was used instead of the aqueous LiOH solution.

**Comparative Example 3**

Comparative Example 3 was performed as in the same manner as Example 2 with the exception that during the (1) elution step in [Preparation of ATH particles], an aqueous NaOH solution was used instead of the aqueous LiOH solution.

D50 Measurement Method of Aluminum Trihydroxide Particles

The D50 of the ATH particles was measured using a laser diffraction method by putting the ATH particles in the wet particle size analysis equipment (Mastersizer 3000, Malvern company).

BET Measurement Method of Aluminum Trihydroxide Particles

The BET of the ATH particles was measured from the amount of adsorbed nitrogen gases using BET analysis equipment (BELSORP-mini II, BEL company).

Measurement Method of Li Content of Aluminum Trihydroxide particles

Approximately 0.1 g of the ATH particles were taken into a Coming tube, to measure the weight. Subsequently, 1.5 mL of concentrated hydrochloric acid and 0.2 mL of hydrogen peroxide were added to the ATH particles and shaken sufficiently to mix, and then, elution was carried out by boiling the mixture in boiling water (for 4 hours or more at 130 °C).

Next, the eluted result was cooled to room temperature, then 200 μL of hydrofluoric acid was added thereto, and the result material was sealed, and reacted at room temperature for 3 hours.

Then, 1 mL of boric acid and 0.2 mL of an internal standard material (Sc, Scandium) were added to a reaction product and diluted with 20 mL of ultrapure water.

A sample was prepared by filtering the diluted result using a filter of 0.45 μm.

ALi content and a Na content in the ATH particles were measured for the sample using ICP-OES equipment (OPTIMA 5300 OV, Perkin Elmer company).

Measurement Method of Heat Shrinkage Rate

The manufactured separators of Examples and Comparative Examples were left in an oven at 150 °C for 30 minutes, and then heat shrinkage rates thereof were measured.

The heat shrinkage rate was obtained by marking two arbitrary points in a machine direction (MD) and a transverse direction (TD) of the separator, and calculating a rate of change (variance) in a distance (gauge distance) between the two points according to Equation 1 below,

$$(\text{Equation 1})$$

$$\text{Heat Shrinkage Rate } (\%) = \{(B-A)/A\} \times 100$$

In the Equation 1, A is a gauge distance before leaving the separator at high temperature, and B is a gauge distance after leaving the separator at high temperature for 30 minutes.

Measurement Method of Capacity Retention Rate

Lithium secondary batteries of Examples and Comparative Examples manufactured by the above-mentioned method were repeatedly charged and discharged in a range of 2.5 V to 4.25 V at a rate of 1 C (current) at 25 °C, and a ratio of discharge capacity after 200 cycles compared to an initial discharge capacity was calculated to measure a capacity retention rate. Here, 1 C is a unit that defines charging and discharging rates of the secondary battery and means the rate at which the battery is fully charged or fully discharged when charged or discharged for one hour. For example, when the capacity of the secondary battery is 1000 mA, when the secondary battery is fully charged over one hour, it may be said to be charged at a rate of 1 C, and when the secondary battery is fully charged over 30 minutes, it can be said to be charged at a rate of 2 C.

[Table 1]

| Classification | | Exam. 1 | Exam. 2 | Exam. 3 | Comp. Exam. 1 | Comp. Exam. 2 | Comp. Exam. 3 |
|---|---|---|---|---|---|---|---|
| Aluminum Trihydroxide Particles | Li Content (ppm) | 2830 | 1910 | 1050 | 440 | <10 | <10 |
| | Na Content (ppm) | <1 | <1 | <1 | 990 | 2500 | 1750 |
| | D50 (μm) | 0.9 | 1.2 | 2.2 | 1.3 | 0.9 | 1.4 |
| | BET (m²/g) | 10.6 | 7.8 | 4.2 | 6.5 | 9.8 | 7.3 |
| Separator | Total Thickness of Double-Sided Coating Layer (μm) | 3.2 | 3.1 | 4.0 | 3.2 | 3.4 | 3.4 |
| | Heat Shrinkage Rate (%) MD/TD | 3/3 | 5/4 | 16/14 | 5/5 | 3/3 | 7/6 |
| Lithium Secondary Battery | Capacity Retention Rate (%) | 96 | 95 | 93 | 88 | 86 | 83 |

As seen in Table 1, it can be confirmed that in the Examples 1 to 3 to which the present disclosure is applied, capacity retention rates were 96%, 95%, and 93%, respectively, which were significantly improved compared to 88%, 86%, and 83% of the Comparative examples.

Although the present disclosure has been described above with reference to preferred embodiments, those skilled in the art or persons having ordinary knowledge in the relevant technical field will understand that various embodiments of the present disclosure have been described herein for purposes of illustration, and that various modifications and changes may be made without departing from the scope and spirit of the present disclosure. Accordingly, the various embodiments disclosed herein are not intended to be limiting, with the true scope and spirit being indicated by the following claims.

**Claims**

1. Aluminum trihydroxide particles comprising a D50 of about 3.0 $\mu$m or less, a BET of about 3.0 m$^2$/g or more, and a Li content of about 500 ppm or more.

2. The aluminum trihydroxide particles according to claim 1, wherein the D50 of the particles is about 2.5 $\mu$m or less, the BET is about 3.5 m$^2$/g or more, and the Li content is about 800 ppm or more.

3. The aluminum trihydroxide particles according to claim 1, wherein the D50 of the particles is about 2.7 $\mu$m or less, the BET is about 3.8 m$^2$/g or more, and the Li content is about 900 ppm or more.

4. The aluminum trihydroxide particles according to claim 1, wherein the D50 of the particles is about 2.2 $\mu$m or less, the BET is about 4.2 m$^2$/g or more, and the Li content is about 1050 ppm or more.

5. The aluminum trihydroxide particles according to claim 1, wherein a Na content is about 900 ppm or less.

6. The aluminum trihydroxide particles according to claim 1, wherein a Na content is about 100 ppm or less.

7. The aluminum trihydroxide particles according to claim 1, wherein a Na content is about 10 ppm or less.

8. A preparation method of aluminum trihydroxide particles, the preparation method comprising:

   (S1) obtaining an eluate by adding bauxite to a basic aqueous solution containing Li;
   (S2) separating the eluate obtained at (S1) by filtering solids from the eluate; and
   (S3) precipitating aluminum trihydroxide from the separated eluate,
   wherein the aluminum trihydroxide particles have a D50 of about 3.0 $\mu$m or less, a BET of about 3.0 m$^2$/g or more, and a Lithium (Li) content of about 500 ppm or more.

9. The preparation method according to claim 8, wherein the basic aqueous solution containing Li is aqueous LiOH solution.

10. The preparation method according to claim 8, further comprising:
    prior to (S3), adding aluminum trihydroxide seeds to the separated eluate, stirring the eluate, and then filtering the aluminum trihydroxide seeds to separate the eluate again.

11. The preparation method according to claim 8, wherein the aluminum trihydroxide precipitated from (S3) is pulverized, and then the pulverized aluminum trihydroxide is added to (S1) instead of the bauxite to repeat (S1) to (S3).

12. A separator comprising:

    a porous polymer film or non-woven fabric; and
    an organic-inorganic composite coating layer formed on at least one surface of the porous polymer film or non-woven fabric and including a mixture of inorganic particles and a polymer,
    wherein the inorganic particles include the aluminum trihydroxide particles according to claim 1.

13. A separator comprising a free-standing type organic-inorganic composite film including a mixture of inorganic particles and a polymer,
    wherein the inorganic particles include the aluminum trihydroxide particles according to claim 1.

14. An electrode assembly comprising a positive electrode, a negative electrode, and a separator interposed between the positive electrode and the negative electrode,
wherein the separator is the separator according to claim 12.

15. An electrode assembly comprising:

    a positive electrode;
    a negative electrode; and
    a separator interposed between the positive electrode and the negative electrode,
    wherein the separator is the separator according to claim 13.

16. An electrode assembly comprising a separator of a porous organic-inorganic composite coating layer formed on at least one surface of a positive electrode, a negative electrode, or both the positive electrode and the negative electrode, and including a mixture of inorganic particles and a binder polymer,
    wherein the inorganic particles include the aluminum trihydroxide particles according to claim 1.

17. A lithium secondary battery comprising the electrode assembly of claim 14.

18. A lithium secondary battery comprising the electrode assembly of claim 15.

19. A lithium secondary battery comprising the electrode assembly of claim 16.

## INTERNATIONAL SEARCH REPORT

| International application No. |
| --- |
| **PCT/KR2024/000289** |

**A. CLASSIFICATION OF SUBJECT MATTER**

**C01F 7/02**(2006.01)i; **C09D 7/61**(2018.01)i; **H01M 50/446**(2021.01)i; **H01M 50/449**(2021.01)i; **H01M 50/443**(2021.01)i; **H01M 50/46**(2021.01)i; **H01M 10/052**(2010.01)i

According to International Patent Classification (IPC) or to both national classification and IPC

**B. FIELDS SEARCHED**

Minimum documentation searched (classification system followed by classification symbols)

C01F 7/02(2006.01); B32B 27/20(2006.01); C01F 7/46(2006.01); H01M 10/052(2010.01); H01M 2/16(2006.01); H01M 50/403(2021.01); H01M 50/414(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 알루미늄 트리하이드록사이드(aluminum trihydroxide, ATH), 비표면적(specific surface area, BET), 평균입경(average particle size, D50), 보크사이트(bauxite)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2016-108210 A (MITSUBISHI PLASTICS INC.) 20 June 2016 (2016-06-20) See claims 1-2; paragraphs [0001]-[0078]; and figure 1. | 1-4,12-19 |
| Y | | 5-11 |
| Y | US 7067106 B2 (MALITO, J. T.) 27 June 2006 (2006-06-27) See column 1, line 28 - column 6, line 22. | 5-11 |
| A | KR 10-2020-0021664 A (SK IE TECHNOLOGY CO., LTD. et al.) 02 March 2020 (2020-03-02) See entire document. | 1-19 |
| A | WO 2022-268968 A1 (NORTHVOLT AB.) 29 December 2022 (2022-12-29) See entire document. | 1-19 |
| A | JP 2015-501523 A (SK INNOVATION COMPANY LTD.) 15 January 2015 (2015-01-15) See entire document. | 1-19 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 April 2024** | **16 April 2024** |

| Name and mailing address of the ISA/KR | Authorized officer |
| --- | --- |
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/000289**

| Patent document cited in search report | | | Publication date (day/month/year) | Patent family member(s) | | | Publication date (day/month/year) |
|---|---|---|---|---|---|---|---|
| JP | 2016-108210 | A | 20 June 2016 | JP | 6394346 | B2 | 26 September 2018 |
| US | 7067106 | B2 | 27 June 2006 | CN | 100798701 | A | 05 July 2006 |
| | | | | CN | 100798701 | B | 04 May 2011 |
| | | | | EP | 1638890 | A1 | 29 March 2006 |
| | | | | EP | 1638890 | A4 | 20 October 2010 |
| | | | | JP | 2007-523815 | A | 23 August 2007 |
| | | | | JP | 4611200 | B2 | 12 January 2011 |
| | | | | US | 2004-0265220 | A1 | 30 December 2004 |
| | | | | WO | 2005-009903 | A1 | 03 February 2005 |
| KR | 10-2020-0021664 | A | 02 March 2020 | CN | 110854346 | A | 28 February 2020 |
| | | | | CN | 110854346 | B | 21 July 2023 |
| | | | | EP | 3614456 | A1 | 26 February 2020 |
| | | | | EP | 3614456 | B1 | 07 July 2021 |
| | | | | US | 10854864 | B2 | 01 December 2020 |
| | | | | US | 2020-0067048 | A1 | 27 February 2020 |
| WO | 2022-268968 | A1 | 29 December 2022 | WO | 2022-268988 | A1 | 29 December 2022 |
| JP | 2015-501523 | A | 15 January 2015 | CN | 103907222 | A | 02 July 2014 |
| | | | | CN | 103907222 | B | 15 February 2017 |
| | | | | EP | 2774192 | A1 | 10 September 2014 |
| | | | | EP | 2774192 | B1 | 23 August 2017 |
| | | | | JP | 6173328 | B2 | 02 August 2017 |
| | | | | KR | 10-2013-0048843 | A | 13 May 2013 |
| | | | | US | 2014-0295170 | A1 | 02 October 2014 |
| | | | | US | 9562164 | B2 | 07 February 2017 |
| | | | | WO | 2013-066012 | A1 | 10 May 2013 |

Form PCT/ISA/210 (patent family annex) (July 2022)

**EP 4 534 481 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230025344
- KR 1020240001329